(19) Europäisches Patentamt
European Patent Office
Office européen des brevets

(11) **EP 2 876 350 B1**

(12) **EUROPÄISCHE PATENTSCHRIFT**

(45) Veröffentlichungstag und Bekanntmachung des Hinweises auf die Patenterteilung:
**07.11.2018 Patentblatt 2018/45**

(51) Int Cl.:
*F16N 15/00* (2006.01)     *C10M 177/00* (2006.01)
*C10M 105/72* (2006.01)

(21) Anmeldenummer: **14004061.9**

(22) Anmeldetag: **18.08.2006**

(54) **PHOTOLUBRIKATION**

LUBRICATION BY EXPOSURE TO LIGHT

PHOTOLUBRIFICATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.08.2005 DE 102005039594**

(43) Veröffentlichungstag der Anmeldung:
**27.05.2015 Patentblatt 2015/22**

(62) Dokumentnummer(n) der früheren Anmeldung(en) nach Art. 76 EPÜ:
**06776961.2 / 1 915 565**

(73) Patentinhaber: **Landesstiftung Baden-Württemberg GmbH**
**70191 Stuttgart (DE)**

(72) Erfinder:
• **Schimmel, Thomas**
**76131 Karlsruhe (DE)**
• **Marti, Othmar**
**89075 Ulm (DE)**

(74) Vertreter: **Müller-Boré & Partner**
**Patentanwälte PartG mbB**
**Friedenheimer Brücke 21**
**80639 München (DE)**

(56) Entgegenhaltungen:
DE-A1- 2 712 874     US-A- 5 775 510
US-A1- 2004 231 926     US-B1- 6 561 378

**Beschreibung**

Die vorliegende Erfindung betrifft ein Verfahren zum orts- und/oder zeitabhängigen Verändern des Reibungskoeffizienten und der Adhäsionskraft zwischen zwei Körpern, welches das Bestrahlen einer oder beider Kontaktflächen zwischen den Körpern mit einer Strahlung umfasst, sowie eine Verwendung des erfindungsgemäßen Verfahrens zum orts- und/oder zeitabhängigen Verändern des Reibungskoeffizienten und der Adhäsionskraft zwischen zwei Körpern.

Jede Bewegung, zumindest auf der Erde, ist mit der Umwandlung von kinetischer Energie in Wärmeenergie verbunden. Für diesen Energieverlust sind Reibungskräfte verantwortlich. Reibungskräfte verursachen neben dem Energieverlust im Allgemeinen auch einen Verschleiß der reibenden Komponenten. Man schätzt, dass in den Industrienationen etwa 5% des Bruttosozialproduktes durch reibungsbedingten Verschleiß verloren geht. Daher kommt der Optimierung der Eigenschaften von reibenden Oberflächen sowie von Schmierfilmen zwischen reibenden Oberflächen zur Minimierung der Reibung eine hohe volkswirtschaftliche Bedeutung zu.

Im Gegensatz dazu ist in anderen Bereichen der Technik Reibung erwünscht. Dies gilt beispielsweise für Prozesse, in denen gezielt Energie dissipiert werden soll, wie beispielsweise bei Fahrzeugbremsen oder bei kontrolliert zu dämpfenden Systemen.

Auch bei Reibungskupplungen und Viscokupplungen wird Reibung definierter Größe gezielt eingesetzt. Bei einem Kassettenrecorder wird durch Reibung ein definiertes Drehmoment unabhängig von der Drehzahl des Motors und der Kassette erzeugt, welches durch die Gleitreibungskräfte zwischen rotierenden scheibenförmigen Objekten definiert wird.

Auch in der Mikrotechnik sind Reibung und Adhäsion von zentraler Bedeutung, da durch Veränderung von Reibung und Adhäsion Objekte gezielt beweglich gemacht oder fixiert werden können. Dabei ist es wichtig festzustellen, dass zwischen Reibungseigenschaften und Adhäsionseigenschaften ein direkter Zusammenhang besteht und die Änderung einer der beiden Eigenschaften in der Regel auch eine entsprechende Änderung der anderen Eigenschaft bewirkt.

Daher ist eine genau definierte und reproduzierbare Einstellung von Reibung und Adhäsion für viele technische Komponenten (Oberflächen, Lager, Kupplungen, etc.) wesentlich. Dies geschieht herkömmlich durch die Verwendung geeigneter Oberflächenbeschichtungen und -funktionalisierungen und/oder durch die Verwendung von Schmiermitteln.

Auf diese Weise ist es allerdings nicht möglich, den Reibungskoeffizienten zwischen zwei Körpern gezielt und kontinuierlich zwischen einem Maximalwert und einem Minimalwert einzustellen (dies wird hier auch als "Tailor-Made Friction" oder "Tailor-Made Lubrication" bezeichnet), und/oder als Funktion der Zeit zu variieren. Ferner ist es mit herkömmlichen Verfahren nicht möglich, den Reibungskoeffizienten reversibel oder irreversibel als Funktion des Ortes zu verändern bzw. zu kontrollieren.

US 5,775,510 A beschreibt eine Struktur zum Schützen von Halbleiterchips während eines Transports, umfassend eine auf einer Platte aufgebrachte Klebeschicht und einen darauf angeordneten Halbleiterchip.

Der vorliegenden Erfindung liegt daher die Aufgabe zugrunde, neue Systeme und Verfahren bereitzustellen, welche es ermöglichen sollen, den Reibungskoeffizienten und die Adhäsionskraft zwischen zwei Körpern irreversibel, gezielt und kontinuierlich zwischen einem Maximalwert und einem Minimalwert einzustellen und bei Bedarf als Funktion der Zeit oder des Ortes zu verändern bzw. zu kontrollieren.

Diese Aufgabe wird durch die in den Ansprüchen gekennzeichneten Ausführungsformen gelöst.

Insbesondere stellt die vorliegende Erfindung ein Verfahren bereit, welches dadurch gekennzeichnet ist, dass der Reibungskoeffizient und die Adhäsionskraft zwischen zwei Körpern ortsabhängig und/oder zeitabhängig variiert werden, indem Strahlung geeigneter Wellenlänge eingestrahlt wird und auf diese Weise die Eigenschaften einer oder beider Kontaktflächen zwischen den beiden Körpern dauerhaft verändert werden.

Die vorliegende Erfindung betrifft somit ein Verfahren zum orts- und/oder zeitabhängigen Verändern bzw. Einstellen des Reibungskoeffizienten und der Adhäsionskraft zwischen zwei Körpern, welches das Bestrahlen einer oder beider Kontaktflächen zwischen den Körpern mit einer Strahlung umfasst, wobei zumindest eine der beiden Kontaktflächen mindestens eine Komponente aufweist, die strahlungsinduziert den Reibungskoeffizienten und die Adhäsionskraft zwischen den beiden Körpern dauerhaft verändert, wobei die mindestens eine Komponente, die strahlungsinduziert den Reibungskoeffizienten und die Adhäsionskraft zwischen den beiden Körpern dauerhaft verändert, einen polaren Hydroxyalkyl-, Thioalkyl- oder Carboxyalkylrest enthält, der strahlungsinduziert abspaltbar ist.

Im Rahmen der vorliegenden Erfindung werden unter dem Begriff "Reibung" im Wesentlichen Haftreibung und Gleitreibung verstanden. Die Reibungskraft $F_R$ ist näherungsweise unabhängig von der Geschwindigkeit und wird lediglich durch die Normalkraft $F_N$ bestimmt, durch die der Körper auf die Unterlage gedrückt wird:

$$F_R = \mu \cdot F_N$$

Dabei wird die Proportionalitätskonstante $\mu$ als Reibungskoeffizient bezeichnet. Der Reibungskoeffizient hängt von der Art und Oberflächenbeschaffenheit der beiden Materialien ab und ist für die Haftreibung meist größer als für die Gleitreibung. Im Rahmen der vorliegenden Erfindung wird der Reibungskoeffizient als Maß für die Stärke der zwischen zwei Körpern auftretenden Reibung verwendet.

Unter dem Begriff "Adhäsionskraft" wird im Rahmen der vorliegenden Erfindung die Kraft verstanden, die zwischen zwei festen Stoffen oder einem festen und einem flüssigen Stoff auftritt und ein Aneinanderhaften der beiden Stoffe bewirkt. Diese Kraft wird auch als Oberflächenhaftung oder vereinfacht als Adhäsion bezeichnet.

Die strahlungsinduzierte Änderung des Reibungskoeffizienten und der Adhäsionskraft zwischen zwei Körpern wird im Rahmen der vorliegenden Erfindung auch als "Photolubrikation" bezeichnet. Diese Änderung kann sowohl eine Erhöhung als auch eine Erniedrigung des Reibungskoeffizienten und der Adhäsionskraft darstellen. Die Änderung des Reibungskoeffizienten betrifft vorzugsweise die Änderung des Haftreibungskoeffizienten und/oder des Gleitreibungskoeffizienten.

Gemäß der vorliegenden Erfindung sind die zwei Körper beliebige, gegebenenfalls voneinander verschiedene Körper, die sich im Kontakt zueinander befinden oder in Kontakt zueinander gebracht werden können und zwischen denen bei Kontakt Reibung und/oder Adhäsion an den Kontaktflächen auftritt. Das Material der Kontaktflächen kann beispielsweise jedes beliebige geeignete Material sein. Vorzugsweise bestehen die Kontaktflächen der beiden Körper unabhängig voneinander aus Metallen oder Metalllegierungen, Glas oder anderen oxidischen Werkstoffen, Kunststoffen, Silizium, keramischen Werkstoffen oder Compositmaterialien, vorzugsweise auf Kohlenstoffbasis, aus graphitischen Materialien, Molybdändisulfid oder anderen Schichtmaterialien, oder aus Schichtsilikaten.

Vorzugsweise besteht zumindest eine der beiden Kontaktflächen aus funktionalisiertem oder nichtfunktionalisiertem Silizium. Bei diesem Material, welches insbesondere für die Mikrosystemtechnik und für mikroelektromechanische Systeme (MEMS) von Bedeutung ist, hängen sowohl die tribologischen als auch die adhäsiven Eigenschaften stark von der Funktionalisierung der Oberfläche ab. Die oberste Schicht eines Silizium-Wafers, einer Silizium-Oberfläche oder beispielsweise eines Silizium-Zahnrades kann beispielsweise aus einer sich an Luft bildenden nativen Siliziumoxidschicht bestehen oder mit Wasserstoff gezielt funktionalisiert oder gezielt mit Hydroxylgruppen terminiert sein. Die Oberflächenchemie lässt sich gezielt über die Bestrahlung in inerter oder reaktiver Umgebung einstellen.

Die beiden Körper können beispielsweise zwei Scheiben einer Fahrzeugbremse oder einer Reibungsoder Viscokupplung sein. Ferner kann einer der beiden Körper ein Rüttelbrett sein und der andere Körper ein zu sortierender Gegenstand, beispielsweise in der Form eines bei Bestrahlung mit Strahlung unterschiedlicher Wellenlänge spektral selektiven Rüttelbrettes.

Das Bestrahlen einer oder beider Kontaktflächen zwischen den Körpern kann durch jede Strahlung erfolgen, die geeignet ist, den Reibungskoeffizienten und die Adhäsionskraft zwischen den beiden Körpern dauerhaft zu verändern. Dazu kann Teilchenstrahlung wie beispielsweise Elektronenstrahlung oder elektromagnetische Strahlung verwendet werden. Vorzugsweise ist die Strahlung aus der Gruppe, bestehend aus sichtbarem Licht, UV-Licht, Infrarotstrahlung, Mikrowellenstrahlung, Gammastrahlung, Elektronenstrahlung, Neutronenstrahlung, Synchrotronstrahlung und Röntgenstrahlung, ausgewählt. Besonders bevorzugt ist die Verwendung von elektromagnetischer Strahlung in einem Wellenlängenbereich von etwa 150 bis 550 nm.

Die Bestrahlung kann auf jede Weise erfolgen, die geeignet ist, dass die Strahlung eine oder beide Kontaktflächen der beiden Körper erreicht. Dies kann beispielsweise mittels eines gepulsten oder kontinuierlichen Lasers oder einer herkömmlichen Lichtquelle wie einer Lampe, UV-Lampe, Gasentladungslampe oder Halogenlampe geschehen. In einer bevorzugten Ausführungsform der vorliegenden Erfindung erfolgt die Bestrahlung mittels eines geeigneten Lichtwellenleiters, durch den die entsprechende Strahlung einer oder beiden Kontaktflächen zwischen den Körpern zugeführt wird. In einer anderen bevorzugten Ausführungsform der vorliegenden Erfindung ist mindestens einer der beiden Körper zumindest teilweise für die entsprechende Strahlung durchlässig, so dass die Bestrahlung der Kontaktflächen durch den strahlungsdurchlässigen Körper erfolgen kann.

Beispielsweise lassen sich über einen kontinuierlichen oder gepulsten Laser oder andere Strahlungsarten thermisch, photochemisch oder anderweitig strahlungsinduziert in inerter gasförmiger oder flüssiger Umgebung (z.B. Helium, Argon oder andere Schutzgase, inerte Flüssigkeiten, Vakuum) oder in reaktiver gasförmiger oder flüssiger Umgebung (z.B. Luft, Sauerstoff, Wasserdampf, Ammoniak, HCl, Säuren, Laugen) die Oberflächenfunktionalisierungen bzw. die chemische Zusammensetzung der Kontaktflächen gezielt verändern. Geeignet sind auch reaktive und inerte Lösungen und Gasgemische. Abhängig von der Bestrahlungsdauer und Intensität lässt sich die Stärke der Änderung in den tribologischen und adhäsiven Eigenschaften kontinuierlich verändern und auf einen gewünschten Wert einstellen.

Zumindest eine der beiden Kontaktflächen zwischen den Körpern weist eine Komponente auf, die strahlungsinduziert den Reibungskoeffizienten und die Adhäsionskraft zwischen den beiden Körpern dauerhaft verändert.

In einer bevorzugten Ausführungsform der vorliegenden Erfindung ist die Komponente in dem Material enthalten, aus welchem die zumindest eine Kontaktfläche aufgebaut ist, oder stellt das Material dar, aus welchem die Kontaktfläche aufgebaut ist. Dabei kann die Komponente beispielsweise eine chemische Verbindung sein, die Bestandteil des Materials der Kontaktfläche ist, oder eine funktionelle Gruppe eines Bestandteils im Material oder des Materials selbst, aus welchem die zumindest eine Kontaktfläche aufgebaut ist, darstellen.

In einer anderen bevorzugten Ausführungsform ist die mindestens eine Komponente, die strahlungsinduziert den Reibungskoeffizienten und die Adhäsionskraft zwischen den beiden Körpern dauerhaft verändert, in einer Beschichtung auf zumindest eine der beiden Kontaktflächen zwischen den Körpern aufgebracht. Die Beschichtung kann in jeder geeigneten Form auf mindestens eine der beiden Kontaktflächen aufgebracht sein. In einer bevorzugten Ausführungsform ist die Beschichtung fest mit der mindestens einen Kontaktfläche verbunden, beispielsweise durch eine chemische Bindung und/oder als fest haftender Film. Vorzugsweise ist die Beschichtung in Form einer selbstassemblierenden Monolage von Molekülen (self-assembled monolayer, "SAM"), beispielsweise von Thiolen auf Metalloberflächen wie Gold oder Silber, oder von Silanen auf Siliziumdioxid oder anderen oxidischen Oberflächen, oder in Form einer Langmuir-Blodgett-Schicht oder Multischicht auf die mindestens eine der beiden Kontaktflächen aufgebracht. Bei Vorliegen der Beschichtung in Form einer Monolage kann diese Monolage von Molekülen geordnet (wie beispielsweise im Fall der SAM) oder auch ungeordnet aufgebracht sein.

Die Beschichtung kann jede geeignete Dicke aufweisen. Vorzugsweise liegt die Dicke der Beschichtung im Bereich von 0,1 nm bis 10 $\mu$m, besonders bevorzugt im Bereich von 0,15 nm bis 50 nm.

Die Komponente kann ferner frei auf der Kontaktfläche adsorbiert sein, über van-der-Waals-Wechselwirkungen, polare Wechselwirkungen und/oder über Wasserstoffbrückenbindungen an zumindest eine Kontaktfläche gebunden sein, auf zumindest einer Kontaktfläche chemisorbiert sein oder chemisch fest (kovalent oder ionisch) mit zumindest einer Kontaktfläche verbunden sein.

Es ist auch möglich, verschiedene Formen, in welchen die Kontaktflächen die mindestens eine Komponente aufweisen können, zu kombinieren. So kann sowohl die Kontaktfläche selber die mindestens eine Komponente aufweisen und gleichzeitig eine Beschichtung in Form eines Schmiermittels, welches die gleiche oder eine andere Komponente enthält, zwischen den Kontaktflächen vorliegen. Ferner ist es möglich, dass eine oder beide Kontaktflächen die mindestens eine Komponente in Form einer fest mit der mindestens einen Kontaktfläche verbundenen Beschichtung aufweist und gleichzeitig eine Beschichtung in Form eines Schmiermittels, welches die gleiche oder eine andere Komponente enthält, zwischen den Kontaktflächen vorliegt.

Vorzugsweise handelt es sich bei der mindestens einen Komponente, die strahlungsinduziert den Reibungskoeffizienten und die Adhäsionskraft zwischen den beiden Körpern dauerhaft verändert, um eine Verbindung, die aus der Gruppe, bestehend aus Thiolen, ausgewählt ist.

Die Änderung des Reibungskoeffizienten und der Adhäsionskraft erfolgt dadurch, dass die mindestens eine Komponente durch die Bestrahlung eine chemische Reaktion eingeht, welche irreversibel ist. Dabei wird im Rahmen der vorliegenden Erfindung unter einer chemischen Reaktion jede Reaktion verstanden, bei der zumindest eine chemische Bindung (beispielsweise eine kovalente, ionische oder Wasserstoffbrückenbindung) gebrochen und/oder geknüpft wird.

Vorzugsweise erfolgt die chemische Reaktion photochemisch oder thermisch. Eine thermische Reaktion kann beispielsweise durch geeignete Laserstrahlung induziert werden. Um eine chemische Reaktion zu erreichen, weist die mindestens eine Komponente vorzugsweise eine oder mehrere funktionelle Gruppen auf, die geeignet ist bzw. sind, strahlungsinduziert diese chemische Reaktion einzugehen.

Die Komponente umfasst einen polaren Hydroxyalkyl-, Thioalkyl- oder Carboxyalkylrest, der strahlungsinduziert abspaltbar ist. Durch die Abspaltung eines solchen polaren Restes ist es beispielsweise möglich, die tribologischen und adhäsiven Eigenschaften der mindestens einen Kontaktfläche derart zu ändern, dass der Reibungskoeffizient und die Adhäsionskraft zwischen den beiden Körpern signifikant verändert wird.

In einer weiteren bevorzugten Ausführungsform der vorliegenden Erfindung ist die Komponente chemisch an die mindestens eine Kontaktfläche gebunden. Diese Bindung an die Kontaktfläche kann beispielsweise über eine in der Komponente enthaltene Sulfid-Funktion oder Siloxan-Funktion erfolgen.

In einer besonders bevorzugten Ausführungsform der vorliegenden Erfindung ist die Komponente ein an die Kontaktfläche gebundenes Thiol mit dem Rest -$(CH_2)_n$-O-O-$(CH_2)_m$-SH, wobei n und m jeweils unabhängig voneinander eine ganze Zahl von 1 bis 20 sind und die Peroxid-Bindung strahlungsinduziert spaltbar ist.

In einer weiteren bevorzugten Ausführungsform der vorliegenden Erfindung weist zumindest eine der beiden Kontaktflächen die mindestens eine Komponente in Form eines ortsabhängig und/oder zeitabhängig veränderbaren Musters auf. So kann durch geeignete Wahl der Komponente der Reibungskoeffizient und die Adhäsionskraft zwischen den zwei Körpern zeitabhängig verändert werden. Bei Verwendung einer Komponente, die strahlungsinduziert eine irreversible Reaktion eingeht, beispielsweise die Abspaltung eines polaren Restes, erfolgt eine dauerhafte Änderung des Reibungskoeffizienten und der Adhäsionskraft, die auch nach Beendigung der Bestrahlung andauert. Wird dagegen eine Komponente verwendet, die strahlungsinduziert eine reversible Reaktion eingeht, beispielsweise eine Isomerisierung, kann die Änderung von vorübergehender Natur sein. Dabei erfolgt die Umwandlung in den ursprünglichen Zustand gegebenenfalls strahlungsinduziert oder ohne äußere Einwirkung nach Relaxation, vorzugsweise nach kurzer Relaxation.

Mit dem erfindungsgemäßen Verfahren ist es so beispielsweise möglich, durch Dosieren der Bestrahlung den Reibungskoeffizienten und Adhäsionskraft zwischen zwei Körpern dauerhaft zu modifizieren und über das Ausmaß der Modifizierung (d.h. der Anteil der in der Beschichtung enthaltenen Komponente, die lichtinduziert eine chemische Reaktion eingegangen ist) genau einzustellen. Damit kann mit dem erfindungsgemäßen Verfahren die Adhäsionskraft und der Reibungskoeffizient maßgeschneidert eingestellt werden (ein solcher Reibungskoeffizient wird hier auch als "Tailor-Made Friction Coefficient" bezeichnet). Ferner ist es möglich, den Reibungskoeffizienten und die Adhäsionskraft zwischen zwei Körpern gezielt durch Bestrahlung mittels geeigneter Strahlung zeitabhängig zu modifizieren (dies wird hier auch als "Lubrication on Demand" bezeichnet).

Ferner kann der Reibungskoeffizient und die Adhäsionskraft zwischen den zwei Körpern ortsabhängig verändert werden, indem nur ein Teilbereich der zumindest einen Kontaktfläche die Komponente aufweist oder nur ein Teilbereich der zumindest einen Kontaktfläche bestrahlt wird.

In einer weiteren bevorzugten Ausführungsform erfolgt die Bestrahlung der einen oder der beiden Kontaktflächen zwischen den Körpern in Form eines ortsabhängigen und/oder zeitabhängigen Musters. Dies kann durch im Stand der Technik bekannte Verfahren unter Verwendung von Masken wie beispielsweise Kontaktmasken, oder optisch abbildende Systeme, oder Punkt für Punkt beispielsweise in einem Rasterverfahren erfolgen. Ferner kann durch geeignete orts- und/oder zeitabhängige Modulation der Intensität der Strahlung ein Muster erzeugt werden, durch welches das Ausmaß, die Dauer und der Ort der Änderung des Reibungskoeffizienten und der Adhäsionskraft genau und kontinuierlich zwischen einem Minimal- und einem Maximalwert einstellbar ist. Dies ist beispielsweise durch gepulste Bestrahlungssysteme möglich.

In einer weiteren bevorzugten Ausführungsform des erfindungsgemäßen Verfahrens weist zumindest eine der beiden Kontaktflächen mindestens zwei verschiedene Komponenten auf, die bei unterschiedlicher Strahlung unabhängig voneinander den Reibungskoeffizienten und die Adhäsionskraft zwischen den beiden Körpern verändern. Dabei kann beispielsweise ein Teilbereich der Kontaktfläche eine Komponente enthalten und ein anderer Teilbereich der Kontaktfläche eine andere Komponente enthalten. Dies ist beispielsweise durch strukturiertes Beschichten mittels "Microcontact Printing" möglich. Je nach verwendeter Strahlung kann dann die eine oder die andere Komponente ihre Reibungs- und Adhäsionseigenschaften ändern. Bei Verwendung beider Wellenlängen können beide Komponenten ihre Reibungs- und Adhäsionseigenschaften gleichzeitig ändern.

Es ist aber auch möglich, dass die beiden Komponenten in der zumindest einen Kontaktfläche nicht räumlich voneinander getrennt sind, sondern nebeneinander vorliegen. Auf diese Weise ist es möglich, sowohl die Reibungs- als auch die Adhäsionseigenschaften der Kontaktflächen zwischen den beiden Körpern einzustellen. Denn um diese beiden verschiedenen Eigenschaften im Wesentlichen unabhängig voneinander einzustellen, sind mindestens zwei unabhängig voneinander einstellbare Parameter notwendig. Durch Verwendung zweier verschiedener Komponenten, die bei unterschiedlicher Strahlung den Reibungskoeffizienten und/oder die Adhäsionskraft zwischen den beiden Körpern verändern, sind zwei solche Parameter gegeben. Dadurch lassen sich der Reibungskoeffizient sowie die Adhäsionskraft der Kontaktflächen zwischen den beiden Körpern orts- und zeitabhängig maßgeschneidert verändern bzw. einstellen.

Ein wichtiger Vorteil der Verwendung von Strahlung in dem erfindungsgemäßen Verfahren liegt somit in dem spektralen Freiheitsgrad. Dadurch lassen sich bei Verwendung verschiedener Komponenten in der Beschichtung, die ihre Reibungseigenschaften und/oder Adhäsionseigenschaften durch Bestrahlung mit unterschiedlicher Strahlung oder Wellenlänge ändern, der Reibungskoeffizient und die Adhäsionskraft der Kontaktflächen zwischen den beiden Körpern unabhängig voneinander einstellen. Dies erfolgt vorzugsweise durch ort- und/oder zeitabhängige Modulation der Intensität der Strahlung.

Ein weiterer Vorteil der Verwendung von Strahlung in dem erfindungsgemäßen Verfahren liegt darin, dass Strahlung, insbesondere Licht, kostengünstig und ortsselektiv mit einer Auflösung bis in den Nanometerbereich auf eine Oberfläche eingebracht werden kann. Ferner ermöglicht die Verwendung von beispielsweise elektromagnetischer Strahlung eine einfache Modulierung als Funktion der Zeit und die exakte und kostengünstig realisierbare räumliche und zeitliche Kontrolle der Lichtintensität. Außerdem verlaufen zahlreiche strahlungsinduzierte chemische Reaktionen, Konformationsänderungen und Strukturänderungen extrem schnell, was eine direkte und schnelle Änderung des Reibungskoeffizienten und/oder der Adhäsionskraft der Kontaktfläche(n) durch die Bestrahlung bewirkt.

Im Gegensatz dazu sind nicht-strahlungsinduzierte chemische Reaktionen im Vergleich zu strahlungsinduzierten Reaktionen häufig viel langsamer und würden daher nicht eine direkte und schnelle Änderung des Reibungskoeffizienten und der Adhäsionskraft der Kontaktfläche(n) ermöglichen. Außerdem ist bei nichtstrahlungsinduzierten chemischen Reaktionen, wie beispielsweise herkömmlichen thermisch induzierten Reaktionen, eine deutlich geringere räumliche Auflösung möglich. Elektrisch induzierte Oberflächenprozesse zur Veränderung der Reibungseigenschaften und Adhäsionseigenschaften würden im Gegensatz zum erfindungsgemäßen strahlungsinduzierten Verfahren die Verwendung von Elektroden erfordern, was in zahlreichen Anwendungen sehr nachteilig wäre.

Die vorliegende Erfindung betrifft ferner die Verwendung des erfindungsgemäßen Verfahrens zum orts- und/oder zeitabhängigen Verändern des Reibungskoeffizienten und der Adhäsionskraft zwischen zwei Körpern.

Dieses Verfahren kann beispielsweise zur Selbstassemblierung von Objekten auf einer Oberfläche mit strukturierter Reibung und damit in der Form eines Rüttelbretts verwendet werden. Dies kann dadurch erreicht werden, dass Objekte auf der Oberfläche auf den Bereichen mit niedrigem Reibungskoeffizienten und niedriger Adhäsionskraft durch mechanische Anregung, beispielsweise periodische Anregung, in Bewegung versetzt werden und erst in Bereichen mit hohem Reibungskoeffizienten und Adhäsionskraft (im Folgenden auch als Kontaktpads bezeichnet) haften. Die Kontaktpads stellen als hochreibende Kontaktfläche ein Templat dar. Vorzugsweise weisen die Kontaktpads etwa die gleiche Größe und Form wie die Kontaktflächen der zu assemblierenden Objekte auf. Dabei können die Objekte nicht nur auf die korrekte Position gebracht werden, sondern auch in der richtigen räumlichen Orientierung, welche durch die Ausrichtung der Kontaktpads vorgegeben ist, angeordnet werden. Auf diese Weise können unterschiedliche Objekte auf der Oberfläche mit strukturierter Reibung angeordnet werden, wobei sich die Objekte in ihrer Kontaktfläche deutlich voneinander unterscheiden und jedes Objekt auf dem Kontaktpad fixiert wird, welcher der Form der Kontaktfläche des Objektes am besten entspricht.

Vorzugsweise können durch das Rüttelbrett auch zwei oder mehr verschiedene Arten von Objekten getrennt werden, indem jedes Kontaktpad zwei oder mehr verschiedene Komponenten aufweist, die bei unterschiedlicher Strahlung unabhängig voneinander den Reibungskoeffizienten und/oder die Adhäsionskraft zwischen dem Kontaktpad und dem zu assemblierenden Objekt verändern. Auf diese Weise ist es möglich, durch Bestrahlung mit Licht der einen Wellenlänge die eine Komponente in den Kontaktpads selektiv zu aktivieren, so dass nur die zu dieser Komponente passende Art von Objekten auf den Kontaktpads haften bleibt, während durch Bestrahlung mit Licht einer anderen Wellenlänge eine andere Komponente aktiviert wird und die entsprechenden Objekten auf den Kontaktpads haften bleiben. Ferner kann durch Bestrahlung mit beiden Wellenlängen erreicht werden, dass beide Arten von Objekten gleichzeitig auf den Kontaktpads haften bleiben.

Es ist aber auch möglich, dass zwei oder mehr verschiedene Arten von Kontaktpads vorliegen, die jeweils voneinander verschiedene Komponenten aufweisen. Auf diese Weise ist es möglich, durch Bestrahlung mit Licht der einen Wellenlänge die eine Art von Kontaktpads derart zu aktivieren, dass nur die zu diesen Kontaktpads passende Art von Objekten auf diesen haften bleibt, während durch Bestrahlung mit Licht einer anderen Wellenlänge eine andere Art an Kontaktpads aktiviert wird und die entsprechenden Objekten auf diesen Kontaktpads haften bleiben. Ferner kann durch Bestrahlung mit beiden Wellenlängen erreicht werden, dass beide Arten von Objekten gleichzeitig auf den Kontaktpads haften bleiben.

In einer weiteren bevorzugten Ausführungsform wird das erfindungsgemäße Verfahren zum Sortieren von Objekten verwendet, wobei nur diejenigen Objekte auf den Kontaktpads liegen bleiben, deren Kontaktfläche im Wesentlichen der Form des Kontaktpads entspricht, während die übrigen Objekte aufgrund der mechanischen Anregung nicht liegen bleiben. Dabei erfolgt der Weitertransport und Sortierung der nicht zu den Kontaktpads passenden Objekte vorzugsweise dadurch, dass die Oberfläche mit strukturierter Reibung gegen die Horizontale geneigt ist und somit bei mechanischer Anregung ein Weitertransport derjenigen Objekte stattfindet, die nicht auf einem Kontaktpad mit ausreichender Kontaktfläche haften bleiben. Vorzugsweise wird dabei die Amplitude der mechanischen Anregung ausreichend hoch gewählt, damit die Objekte, deren Kontaktfläche in Form und Größe nicht zu den Kontaktpads passen, nicht haften bleiben, sondern weitertransportiert werden. Gleichzeitig sollte die Amplitude aber auch ausreichend niedrig gewählt werden, damit die zu den Kontaktpads passenden Objekte auf diesen trotz der bestehenden mechanischen Anregung haften bleiben und sich höchstens noch in ihrer Orientierung dem Kontaktpad anpassen.

Die mechanische Anregung erfolgt vorzugsweise durch ein Rüttelverfahren, durch Ultraschall, durch Stoßwellen oder durch Oberflächenwellen. Ferner kann die mechanische Anregung durch einen Stick-Slip-Prozess erfolgen, indem das Templat vorzugsweise periodisch langsam in eine Richtung und dann schnell in die Gegenrichtung bewegt wird, so dass durch Trägheitskräfte bei der schnellen Teilbewegung eine Gleitbewegung der Objekte auf den niedrigreibenden Bereichen der Oberfläche (nicht jedoch auf den Kontaktpads) erfolgt, bei der langsamen Bewegung dagegen nicht. In einer weiteren bevorzugten Ausführungsform unterscheiden sich die zu sortierenden Objekte in ihren Reibungskoeffizienten.

Das erfindungsgemäße Verfahren kann weiter verwendet werden, um Objekte durch entsprechende Erhöhung der Haftreibung durch Bestrahlung auf einer Oberfläche zu fixieren, oder vor dem Bestrahlen durch Haftreibung auf einer Oberfläche fixierte Körper durch Bestrahlen und einer damit verbundenen Erniedrigung der Haftreibung von der Oberfläche zu lösen. Ferner ist es möglich, eine Bewegung gezielt und kontrolliert zu einem gewünschten Zeitpunkt und an einem gewünschten Ort abzubremsen oder auszulösen bzw. zu beschleunigen, indem der Reibungskoeffizient orts- und zeitabhängig verändert wird.

In einer weiteren bevorzugten Ausführungsform kann das erfindungsgemäße Verfahren verwendet werden, um die Veränderungen in den Reibungseigenschaften und Adhäsionseigenschaften einer reibenden Oberfläche, die durch eine Temperaturveränderung im reibenden System hervorgerufen werden, durch entsprechende entgegengesetzte Änderungen der Reibungseigenschaften und Adhäsionseigenschaften durch Bestrahlung zu kompensieren. Auf diese Weise kann der Reibungskoeffizient und die Adhäsionskraft in einem reibenden System von der jeweiligen Betriebstemperatur unabhängig konstant gehalten werden.

Besonders bevorzugt wird das erfindungsgemäße Verfahren in mikromechanischen Systemen, in der Mikro- und Nanosystemtechnik und/oder in mikro- und nanoelektromechanischen Systemen (MEMS und NEMS) verwendet.

Die vorliegende Offenbarung betrifft außerdem ein System, welches zwei Körper umfasst, die miteinander im Kontakt stehen oder in Kontakt gebracht werden können, wobei zumindest eine der beiden Kontaktflächen zwischen den Körpern eine wie vorstehend definierte Komponente aufweist, die strahlungsinduziert den Reibungskoeffizienten und die Adhäsionskraft zwischen den beiden Körpern dauerhaft verändert.

Die vorliegende Offenbarung betrifft ferner eine Vorrichtung zum orts- und/oder zeitabhängigen Regeln des Reibungskoeffizienten und der Adhäsionskraft, umfassend dieses System und eine Regeleinheit. Vorzugsweise umfasst die Regeleinheit Mittel zum Bestimmen des Reibungskoffizienten und/oder der Adhäsionskraft und damit operativ verbunden Mittel zum Regeln des Reibungskoeffizienten und/oder der Adhäsionskraft.

Mit dieser Vorrichtung lässt sich auch mit Hilfe der Mittel zum Regeln des Reibungskoeffizienten und/oder der Adhäsionskraft die Reibung und/oder Adhäsion gezielt einstellen. Das Mittel zum Regeln des Reibungskoeffizienten und/oder der Adhäsionskraft ist vorzugsweise ein elektronisch, vorzugsweise mit einem Rechner, gesteuerter Regelkreis.

Damit kann die Reibung und/oder Adhäsion beispielsweise im Rahmen eines Fertigungs- oder Herstellungsprozesses über irreversible strahlungsinduzierte Änderungen exakt gemäß den Spezifikationen kontinuierlich auf einen gewünschten Wert eingestellt werden oder auch für jedes einzelne gefertigte Produkt kundenspezifisch eingestellt werden. Es besteht aber auch die Möglichkeit, in einem laufenden System (beispielsweise Mikromotor, Kupplung, MEMS, Lager, Getriebe etc.) die Reibung kontinuierlich zu überwachen und, mittels irreversibler strahlungsinduzierter Prozesse, gezielt zu korrigieren und/oder auf einen gewünschten Wert einzustellen und beispielsweise mittels Regelkreis auf diesem gewünschten Wert oder Sollwert zu halten. Dies ist insbesondere vorteilhaft, da die Reibung bzw. der Sollwert des Reibungskoeffizienten und/oder der Adhäsionskraft, welche dem Regelkreis vorgegeben werden, orts- und/oder zeitabhängig ist und somit an unterschiedlichen Orten innerhalb des gleichen Systems (beispielsweise Mikromotor, Kupplung, MEMS, Lager, Getriebe etc.) auf unterschiedliche Werte eingestellt werden kann, indem die Bestrahlungsintensität und/oder Dauer bzw. die Bestrahlungsdosis je Flächeneinheit ortsabhängig eingestellt wird.

Die Mittel zum Bestimmen des Reibungskoffizienten und/oder der Adhäsionskraft umfassen vorzugsweise einen Mess-Sensor oder ein Mess-System, durch welches entweder direkt der Reibungskoeffizient und/oder die Adhäsionskraft oder eine mit diesen Größen korrelierte Größe gemessen wird. Es kann aber auch durch die Mittel zum Bestimmen des Reibungskoffizienten und/oder der Adhäsionskraft die chemische Beschaffenheit zumindest einer Kontaktfläche und/oder gegebenenfalls der Beschichtung oder Eigenschaften, die von dieser Beschaffenheit abhängen, gemessen werden. Diese Eigenschaften könnten beispielsweise spektroskopische Eigenschaften sein, die vorzugsweise mit einem optischen, Infrarot-, Sichtbar(VIS)- und/oder Ultraviolett-Spektrometer gemessen werden können, wobei Bestrahlung und Spektroskopie-Messung lokal vorzugsweise jeweils mittels Lichtleiter gezielt an gewünschter Stelle erfolgen können. Alternativ kann der Strahl der Bestrahlungsquelle und/oder der Detektionspunkt des spektroskopischen Detektors in einem Rasterverfahren über die Oberfläche gerastert werden oder Punkt für Punkt an die für die Reibung und/oder Adhäsion relevanten Stellen geführt werden.

Die Vorrichtung umfasst als Mittel zum Regeln des Reibungskoeffizienten und/oder der Adhäsionskraft vorzugsweise einen Computer, eine elektronische Schaltung, eine Regelkreis oder sonstige Regelvorrichtung, welche die Messdaten oder die verarbeiteten Messdaten oder sonstige Informationen über den Zustand der mindestens einen Kontaktfläche und/oder gegebenenfalls der Beschichtung erfasst und die daraus ermittelt, ob und mit welcher Intensität, Dauer bzw. Dosis weiter bestrahlt werden muss, um die gewünschten Werte von Reibung und/oder Adhäsion zu erreichen bzw. wie die Bestrahlungsleistung oder Intensität verändert werden muss, um die gemessene Abweichung vom Sollwert zu beseitigen.

Vorzugsweise wird die Beschaffenheit der Kontaktfläche mittels einer Messvorrichtung im Prozess kontrolliert und mit einem Computer, der die Messdaten verarbeitet und die Bestrahlungsdauer und/oder Dosis steuert, gesteuert bzw. geregelt. Vorzugsweise geschieht dies mittels eines PID-Regelkreises. Dadurch wird eine rechnersteuerbare Bestrahlungsquelle angesteuert, so dass Bestrahlungsdauer und/oder Bestrahlungsintensität und/oder Dosis vom Rechner gesteuert werden. Bei irreversiblen Prozessen wird die Bestrahlung beendet, sobald die gewünschten Werte von Reibung und/oder Adhäsion erreicht sind.

Dadurch ist beispielsweise möglich, die Reibungs- und Adhäsionseigenschaften unabhängig voneinander einzustellen, indem zwei verschiedene Komponenten (Moleküle, funktionelle Gruppen oder aber zwei verschiedene Schichten, Beschichtungen oder Oberflächenbeschaffenheiten) an den Kontaktflächen vorliegen, die auf unterschiedliche Arten von Strahlung oder auf unterschiedliche Wellenlängen der gleichen Strahlungsart sensibel sind und durch diese ihre Reibungs- und Adhäsionseigenschaften ändern. Ändert die eine Spezies bei Bestrahlung mit Strahlung oder Wellenlänge von einer Art nur die Reibungs-, nicht aber ihre Adhäsionseigenschaften und die andere Spezies bei Bestrahlung mit Strahlung oder Wellenlänge von einer anderen Art nur die Adhäsionseigenschaften, nicht aber die Reibungseigenschaften, und ist jede Komponente nur durch eine der beiden Arten oder Wellenlängen in ihren Eigenschaften modifizierbar, so ist eine unabhängige und kontinuierliche orts- und zeitabhängige Einstellung von Reibung und Adhäsion gewährleistet. Dies ist auch möglich, wenn beide Komponenten durch die beiden Strahlungsarten in unterschiedlicher Weise beeinflusst werden und wenn jede der beiden Strahlungsarten Reibung und Adhäsion jeder der beiden Spezies in unterschiedlicher Weise beeinflusst. Ferner kann beispielsweise statt zweier Komponenten nur eine Komponente mit zwei verschiedenen funktionellen Gruppen oder chemischen Bindungen oder Wasserstoffbrückenbindungen verwendet werden, die sich nur durch je eine der beiden Strahlungsarten oder Wellenlängen verändern lassen, d.h. eine durch die eine Strahlungsart oder Wellenlänge, die andere durch die andere, oder beide durch beide, aber mit unterschiedlicher Ausbeute oder Sensitivität. Somit erhält man zwei unabhängige Parameter, um Reibung und Adhäsion zu beeinflussen und es ist möglich, innerhalb eines endlichen Wertebereiches, der von den beiden Komponenten abhängt, die beiden Parameter Reibung und Adhäsion unabhängig voneinander durchzustimmen und auf einen gewünschten Sollwert einzustellen.

Die vorliegende Erfindung soll im Folgenden anhand von Beispielen näher erläutert werden, ohne jedoch durch diese beschränkt zu sein.

Beispiele:

Beispiel 1:

Eine goldbeschichtete Oberfläche wird zum Beschichten für mehrere Stunden in eine Lösung getaucht, welche ein Alkanthiol enthält. Das Alkanthiol trägt an einem Ende des Alkylrests eine Thiolgruppe und am anderen Ende eine polare Hydroxylgruppe. In der Alkankette befindet sich ferner eine durch UV-Licht spaltbare Azogruppe. Das Alkanthiol bindet über die Thiol-Funktion an die Goldoberfläche und es bildet sich eine Self-Assembled Monolayer (SAM) dieser Komponente mit von der Goldoberfläche wegzeigenden polaren Gruppen aus.

Die so beschichtete planare Fläche wird mit einer ebenfalls mit polaren Gruppen funktionalisierten Quartzglasoberfläche in Kontakt gebracht und der Reibungskoeffizient zwischen den beiden Körpern bestimmt.

Anschließend wird die Kontaktfläche der beiden Körper durch das Quartzglas mit UV-Licht bestrahlt, wodurch die Azogruppe der Alkanthiol-Komponente in der Beschichtung gespalten wird. Der Rest mit dem polaren Hydroxylrest wird auf diese Weise entfernt, die Wechselwirkung mit der polaren Glasoberfläche wird geringer und damit der Reibungskoeffizient zwischen den beiden Körpern vermindert.

Je nach Dosis der Bestrahlung durch UV-Licht wird nur ein Teil der in der Beschichtung enthaltenen Azogruppen gespalten, wodurch sich der Reibungskoeffizient und die Adhäsionskraft zwischen den beiden Kontaktflächen kontinuierlich zwischen dem Wert für die ursprüngliche Beschichtung und dem Wert für die vollständig abgespaltenen polaren Reste der Alkanthiol-Komponente in der Beschichtung einstellen lässt.

**Patentansprüche**

1. Verfahren zum orts- und/oder zeitabhängigen Verändern des Reibungskoeffizienten und der Adhäsionskraft zwischen zwei Körpern, welches das Bestrahlen einer oder beider Kontaktflächen zwischen den Körpern mit einer Strahlung umfasst, wobei zumindest eine der beiden Kontaktflächen mindestens eine Komponente aufweist, die strahlungsinduziert den Reibungskoeffizienten und die Adhäsionskraft zwischen den beiden Körpern dauerhaft verändert, wobei die mindestens eine Komponente, die strahlungsinduziert den Reibungskoeffizienten und die Adhäsionskraft zwischen den beiden Körpern dauerhaft verändert, einen polaren Hydroxyalkyl-, Thioalkyl- oder Carboxyalkylrest enthält, der strahlungsinduziert abspaltbar ist.

2. Verfahren nach Anspruch 1, wobei die Strahlung aus der Gruppe, bestehend aus sichtbarem Licht, UV-Licht, Infrarotstrahlung, Mikrowellenstrahlung, Gammastrahlung, Elektronenstrahlung, Neutronenstrahlung, Synchrotronstrahlung und Röntgenstrahlung, ausgewählt ist.

3. Verfahren nach Anspruch 1 oder 2, wobei die Bestrahlung mittels Lichtleitereffekten erfolgt.

4. Verfahren nach einem der Ansprüche 1 bis 3, wobei zumindest einer der beiden Körper für die Strahlung durchlässig ist.

5. Verfahren nach einem der Ansprüche 1 bis 4, wobei die mindestens eine Komponente, die strahlungsinduziert den Reibungskoeffizienten und die Adhäsionskraft zwischen den beiden Körpern dauerhaft verändert, in einer Beschichtung auf zumindest eine der beiden Kontaktflächen zwischen den Körpern aufgebracht ist.

6. Verfahren nach Anspruch 5, wobei die Beschichtung fest mit der mindestens einen Kontaktfläche verbunden ist.

7. Verfahren nach Anspruch 5 oder 6, wobei die Beschichtung eine Dicke im Bereich von 0,1 nm bis 1 μm aufweist.

**8.** Verfahren nach einem der Ansprüche 1 bis 7, wobei die mindestens eine Komponente ein Thiol mit einem Rest SH-(CH$_2$)$_n$-O-O-(CH$_2$)$_m$- ist, wobei n und m jeweils unabhängig voneinander eine ganze Zahl von 1 bis 20 sind und die Peroxid-Bindung strahlungsinduziert spaltbar ist.

**9.** Verfahren nach einem der Ansprüche 1 bis 8, wobei zumindest eine der beiden Kontaktflächen die mindestens eine Komponente in Form eines ortsabhängig und/oder zeitabhängig veränderbaren Musters aufweist.

**10.** Verfahren nach einem der Ansprüche 1 bis 9, wobei die Bestrahlung der einen oder der beiden Kontaktflächen zwischen den Körpern in Form eines ortsabhängigen und/oder zeitabhängigen Musters erfolgt.

**11.** Verfahren nach einem der Ansprüche 1 bis 9, wobei zumindest eine der beiden Kontaktflächen mindestens zwei verschiedene Komponenten aufweist, die bei unterschiedlicher Strahlung unabhängig voneinander den Reibungskoeffizienten und die Adhäsionskraft zwischen den beiden Körpern verändern.

**12.** Verwendung des Verfahrens nach einem der Ansprüche 1 bis 11 zum orts- und/oder zeitabhängigen Verändern des Reibungskoeffizienten und der Adhäsionskraft zwischen zwei Körpern.

**13.** Verwendung nach Anspruch 12 als Rüttelbrett zur Selbstassemblierung von Objekten auf einer Oberfläche.


**Claims**

**1.** A method for location and/or time-dependent modification of the friction coefficient and the adhesion force between two bodies which comprises irradiating of one or both contact surfaces between the bodies with radiation, wherein at least one of the two contact surfaces has at least one component which permanently modifies the friction coefficient and the adhesion force between the two bodies induced by radiation, wherein the at least one component which permanently modifies the friction coefficient and the adhesive force between the two bodies induced by radiation contains a polar hydroxyalkyl, thioalkyl or carboxyalkyl radical which can be cleaved in a radiation-induced manner.

**2.** The method according to claim 1, wherein the radiation is selected from the group consisting of visible light, UV light, infrared radiation, microwave radiation, gamma radiation, electron radiation, neutron radiation, synchrotron radiation and x-rays.

**3.** The method according to claim 1 or 2, wherein the irradiation occurs by waveguide effects.

**4.** The method according to any one of claims 1 to 3, wherein at least one of the two bodies is transparent for the radiation.

**5.** The method according to any one of claims 1 to 4, wherein the at least one component which permanently modifies the friction coefficient and the adhesive force between the two bodies induced by radiation is applied in a coating on at least one of the two contact surfaces between the bodies.

**6.** The method according to claim 5, wherein the coating is firmly bonded to the at least one contact surface.

**7.** The method according to claim 5 or 6, wherein the coating has a thickness in the range from 0.1 nm to 1 $\mu$m.

**8.** The method according to any one of claims 1 to 7, wherein the at least one component is a thiol with an SH-(CH$_2$)$_n$-O-O-(CH$_2$)$_m$ radical, in which n and m are each independently an integer from 1 to 20, and the peroxide bond can be cleaved by radiation.

**9.** The method according to any one of claims 1 to 8, wherein at least one of the two contact surfaces has the at least one component in the form of a pattern that can be varied as a function of location and/or time.

**10.** The method according to any one of claims 1 to 9, wherein the irradiation of the one or both contact surfaces between the bodies occurs in the form of a location-dependent and/or time-dependent pattern.

**11.** The method according to any one of claims 1 to 9, wherein at least one of the two contact surfaces has at least two different components that modify the friction coefficient and the adhesion force between the two bodies independently of each other upon different radiation.

**12.** Use of the method according to any one of claims 1 to 11 for location and/or time-dependent modification of the friction coefficient and adhesion force between two bodies.

**13.** Use according to claim 12 as a vibrating board for self-assembly of objects on a surface.


**Revendications**

**1.** Procédé pour la modification variable localement et/ou dans le temps du coefficient de frottement et de la force d'adhésion entre deux corps, qui comporte l'exposition de l'une ou des deux surfaces de contact entre les corps, à des rayons, au moins l'une des deux surfaces de contact comportant au moins un composé qui génère une modification durable du coefficient de frottement et de la force d'adhésion entre les deux corps, induite par rayonnement, ledit au moins un composé qui génère une modification durable, induite par rayonnement du coefficient de frottement et de la force d'adhésion entre les deux corps comportant un reste polaire hydroxyalkyle, thioalkyle ou carboxyalkyle qui est clivable à l'aide de rayonnement.

2. Procédé selon la revendication 1 dans lequel le rayonnement est choisi parmi le groupe comportant la lumière visible, la lumière UV, le rayonnement infrarouge, le rayonnement du type micro-ondes, le rayonnement gamma, le rayonnement d'électrons, le rayonnement de neutrons, le rayonnement synchrotron et les rayons X.

3. Procédé selon la revendication 1 ou 2 dans lequel l'exposition au rayonnement s'effectue moyennant des fibres optiques.

4. Procédé selon l'une des revendications 1 à 3 dans lequel l'un au moins des deux corps est perméable au rayonnement.

5. Procédé selon l'une des revendications 1 à 4 dans lequel ledit au moins un composé qui génère une modification durable, induite par rayonnement, du coefficient de frottement et de la force d'adhésion entre les deux corps est appliqué par enduction sur l'une au moins des deux surfaces de contact entre les deux corps.

6. Procédé selon la revendication 5 dans lequel la couche d'enduction est solidement fixée à ladite au moins une surface de contact.

7. Procédé selon la revendication 5 ou 6 dans lequel la couche d'enduction présente une épaisseur dans la gamme allant de 0,1 nm à 1 $\mu$m.

8. Procédé selon l'une des revendications 1 à 7 dans lequel ledit au moins un composé est un thiol comportant un reste SH-$(CH_2)_n$-O-O-$(CH_2)_m$-, dans lequel n et m sont indépendamment l'un de l'autre un nombre entier allant de 1 à 20 et la liaison peroxyde est clivable à l'aide de rayonnement.

9. Procédé selon l'une des revendications 1 à 8 dans lequel au moins l'une des deux surfaces de contact comporte ledit au moins un composé sous forme d'un motif variable localement et/ou dans le temps.

10. Procédé selon l'une des revendications 1 à 9 dans lequel l'exposition au rayonnement de l'une ou des deux surfaces de contact entre les corps s'effectue sous forme d'un motif variable localement et/ou dans le temps.

11. Procédé selon l'une des revendications 1 à 9 dans lequel l'une au moins des deux surfaces de contact comporte au moins deux composés différents qui sous rayonnements différents modifient indépendamment l'un de l'autre le coefficient de frottement et la force d'adhésion entre les deux corps.

12. Utilisation du procédé selon l'une des revendications 1 à 11 pour la modification variable localement et/ou dans le temps du coefficient de frottement et de la force d'adhésion entre deux corps.

13. Utilisation selon la revendication 12 comme surface vibrante pour l'auto-assemblage d'objets sur une surface.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5775510 A